# EUROPÄISCHE PATENTANMELDUNG

(11) **EP 2 918 618 A1**
(43) Veröffentlichungstag der Anmeldung: **16.09.2015**
(21) Anmeldenummer: 14158576.0
(22) Anmeldetag: 10.03.2014
(51) Int. Cl.: C08G 18/48, C08G 18/66, C08J 5/18, C08G 18/22, C08G 18/42

(54) **Aliphatische thermoplastische Polyurethane, ihre Herstellung und Verwendung**

(71) Anmelder: Bayer MaterialScience AG, 51373 Leverkusen (DE)
(72) Erfinder: Wamprecht, Christian, 41472 Neuss (DE); Shafiq, Faisal, 47807 Krefeld-Fischeln (DE)
(74) Vertreter: BIP Patents

(57) **Zusammenfassung**

Die Erfindung betrifft thermoplastische Polyurethane, die aus der Umsetzung von A) aliphatischen Diisocyanaten mit B) gegenüber Isocyanaten reaktiven Verbindungen mit zahlenmittleren Molekulargewichten von 500 bis 10000 g/mol und C) Kettenverlängerungsmitteln mit zahlenmittleren Molekulargewichten von 60 bis 499 g/mol in Gegenwart von Katalysatoren D) erhältlich sind, sowie ein Verfahren zur Herstellung dieser thermoplastischen Polyurethane und deren Verwendung.

## Beschreibung

Die Erfindung betrifft thermoplastische Polyurethane, die aus der Umsetzung von A) aliphatischen Diisocyanaten mit B) gegenüber Isocyanaten reaktiven Verbindungen mit zahlenmittleren Molekulargewichten von 500 bis 10000 g/mol und C) Kettenverlängerungsmitteln mit zahlenmittleren Molekulargewichten von 60 bis 499 g/mol in Gegenwart von Katalysatoren D) erhältlich sind, sowie ein Verfahren zur Herstellung dieser thermoplastischen Polyurethane und deren Verwendung.

Thermoplastische Polyurethane, im Folgenden auch als TPU bezeichnet, und Verfahren zu deren Herstellung sind allgemein bekannt und vielfältig beschrieben. Diese TPU sind teilkristalline Werkstoffe und gehören zu der Klasse der thermoplastischen Elastomere. Sie zeichnen sich unter anderem durch gute mechanische Festigkeiten, geringe Abriebwerte, hohe Weiterreißfestigkeiten, besonders gute Verschleißfestigkeiten und eine gute Chemikalien- und Lösungsmittelbeständigkeit aus und können nahezu in beliebiger Härte durch entsprechende Rohstoffauswahl hergestellt werden. Zusätzlich bieten TPU den Vorteil, dass sie relativ kostengünstig, beispielsweise nach dem Band- oder Reaktionsextruderverfahren, kontinuierlich oder diskontinuierlich hergestellt werden können und eine einfache Thermoplastverarbeitung erlauben.

Aliphatische TPU werden beispielsweise in folgenden Patentanmeldungen offenbart: DE-A 197 57 569, DE-A 198 00 287, DE-A 198 57 964, EP 1 101 784 A1, EP 1 069 143 A1, DE-A 100 20 163, EP 1 241 201 A1. Zur Herstellung der TPU werden in diesen Patentanmeldungen einschlägig bekannte Polyurethankatalysatoren, beispielsweise übliche tertiäre Amine, wie z.B. Triethylamin, Triisopropylamin, Dimethylcyclohexylamin oder N-Methylmorpholin, oder insbesondere organische Metallverbindungen, wie Titansäureester, Eisenverbindungen und insbesondere Zinnverbindungen, wie z.B. Zinndioctoat oder Dibutylzinndilaurat, genannt und teilweise in den beschriebenen Beispielen verwendet.

In DE-A 101 09 302 werden TPU offenbart, die mit Hilfe von Zinn-(II)-dioctoat und/oder Wismutkatalysatoren hergestellt werden und TPU mit verbesserter Hydrolysebeständigkeit und geringerer Vergilbung bei hohen Temperaturen und starker Sonneneinstrahlung liefern sollen.

Aliphatische TPU finden zunehmend Anwendung bei der Herstellung von lichtstabilen und farbechten Formteilen, wie z. B. Spritzgussteilen jeglicher Form, Schläuche, Kabel und insbesondere Folien, z. B. als durchgängige Folie auf Armaturenbrettern, als kalandrierte Folie auf Geweben und als Dachunterspannfolien. Insbesondere bei der Herstellung von Folien kommt es darauf an, dass das TPU-Material keine Fehlstellen, sogenannte Stippen, in der Folie aufweist, weil solche Fehlstellen Schwachstellen darstellen und zu Löchern in der Folie führen können.

Aufgabe und Ziel der vorliegenden Erfindung war es daher, neue aliphatische TPU bereitzustellen, aus denen sich Folien extrudieren lassen, die keine oder nur sehr geringe Anteile an Fehlstellen enthalten.

Diese Aufgabe konnte durch die im Folgenden näher beschriebenen thermoplastischen Polyurethane gelöst werden.

Gegenstand der Erfindung sind aliphatische thermoplastische Polyurethane erhältlich durch Reaktion von
A) Aliphatischen Diisocyanaten mit
B) Gegenüber Isocyanaten reaktiven Verbindungen mit zahlenmittleren Molekulargewichten von 500 bis 10000 g/mol und zahlenmittleren Funktionalitäten von 1,8 bis 2,5 und
C) Kettenverlängerungsmitteln mit zahlenmittleren Molekulargewichten von 60 bis 490 g/mol
   und zahlenmittleren Funktionalitäten von 1,8 bis 2,5,
   welche dadurch gekennzeichnet sind, dass die Reaktion von A) mit B) und C) in Gegenwart von
D) Zirkonium enthaltenden Katalysatoren und
E) Gegebenenfalls Kettenabbrechern und
F) Gegebenenfalls Hilfs- und Zusatzmitteln erfolgt.

Erfindungsgemäß werden als Katalysatoren D) Zirkonium enthaltende Katalysatoren, insbesondere Zirkon-Komplex Katalysatoren, eingesetzt. Solche Katalysatoren sind z. B. bei den Firmen King Industries über Worlee-Chemie GmbH und Dorf Ketal über Nordmann&Rassmann kommerziell erhältlich.

Ein weiterer Gegenstand der Erfindung ist ein Verfahren zur Herstellung der erfindungsgemäßen aliphatischen thermoplastischen Polyurethane erhältlich durch Reaktion von
A) Aliphatischen Diisocyanaten mit
B) Gegenüber Isocyanaten reaktiven Verbindungen mit zahlenmittleren Molekulargewichten von 500 bis 10000 g/mol und zahlenmittleren Funktionalitäten von 1,8 bis 2,5 und
C) Kettenverlängerungsmitteln mit zahlenmittleren Molekulargewichten von 60 bis 490 g/mol
   und zahlenmittleren Funktionalitäten von 1,8 bis 2,5,
   welches dadurch gekennzeichnet ist, dass die Reaktion von A) mit B) und C) in Gegenwart von
D) Zirkonium enthaltenden Katalysatoren und
E) Gegebenenfalls Kettenabbrechern und
F) Gegebenenfalls Hilfs- und Zusatzmitteln durchgeführt wird.

Verfahren zur Herstellung von aliphatischen thermoplastischen Polyurethanen sind dem Fachmann allgemein bekannt. Üblicherweise erfolgt die Herstellung durch die Umsetzung von A) aliphatischen Diisocyanaten mit B) gegenüber Isocyanaten reaktiven Verbindungen mit zahlenmittleren Molekulargewichten von 500 bis 10000 g/mol und zahlenmittleren Funktionalitäten an reaktiven Gruppen von 1,8 bis 2,5, vorzugsweise 1,8 bis 2,2 und Kettenverlängerungsmitteln C) mit gegenüber Isocyanaten reaktiven Gruppen mit zahlenmittleren Molekulargewichten von 60 bis 499 g/mol und zahlenmittleren Funktionalitäten an reaktiven Gruppen von 1,8 bis 2,5, vorzugsweise 1,8 bis 2,2 in Gegenwart von D) Katalysatoren und gegebenenfalls E) monofunktionellen Kettenabbrechern und F) üblichen Hilfs- und Zusatzstoffen.

Erfindungsgemäß werden als Katalysatoren solche auf Basis von Zirkonium eingesetzt.

Zur Einstellung der Härte der TPU können die Aufbaukomponenten A) bis C) in relativ breiten molaren Verhältnissen variiert werden.

Das molare Verhältnis an gegenüber Isocyanaten reaktiven Gruppen der Komponenten B) und C) zu Isocyanatgruppen der Komponente A) sollte in der vorliegenden Erfindung vorzugsweise bei 0,8:1,0 bis 1,2:1,0, besonders bevorzugt bei 0,9:1,0 bis 1,1:1,0 liegen.

Ein weiterer Gegenstand der Erfindung sind Folien mit einer Dicke von 0,01 bis 2,0 mm, die aus den erfindungsgemäßen aliphatischen thermoplastischen Polyurethanen erhältlich sind.

Die erfindungsgemäßen Folien mit einer Dicke von 0,01 bis 2,0 mm werden aus den erfindungsgemäßen TPU mittels allgemein bekannter Verfahren hergestellt.

Die Herstellung der erfindungsgemäßen thermoplastischen Polyurethane erfolgt nach bekannten Verfahren, üblicherweise im One-Shot- oder Prepolymerverfahren auf einer Bandanlage oder in einem Reaktionsextruder. Hierbei werden die zur Reaktion kommenden Komponenten A) bis C) in Gegenwart von D) und gegebenenfalls E) und F) gemeinsam oder in bestimmter Reihenfolge vereint und zur Reaktion gebracht. Beim Reaktionsextruderverfahren werden die Aufbaukomponenten A) bis C) in Gegenwart von D) und gegebenenfalls E) und F) einzeln nacheinander oder als Gemisch gemeinsam in den Extruder eingeführt, z. B. bei Temperaturen von 100 bis 250 °C, vorzugsweise 150 bis 230 °C, und zur Reaktion gebracht. Das dabei entstehende TPU wird aus dem Extruder ausgetragen, abgekühlt und granuliert.

Die Verarbeitung der erfindungsgemäß hergestellten TPU, die üblicherweise als Granulat oder in Pulverform zur Anwendung kommen, zu den gewünschten Kunststoffteilen, insbesondere Folien, kann beispielsweise durch bekannte Verfahren, wie Spritzguss, Extrusion oder Sintern erfolgen.

Der Spritzguss und die Extrusion von TPU sind allgemein bekannt und vielfältig beschrieben. Als spritzgegossene oder extrudierte Kunststoffteile sind in dieser Anmeldung alle Formen von Bauteilen, Gegenständen und Formen zu verstehen, die mittels Spritzguß oder Extrusion hergestellt werden können. Die Spritzguss- oder Extrusionsverarbeitung kann auf üblichen, dem Fachmann bekannten Anlagen erfolgen. Die Verarbeitungstemperaturen liegen üblicherweise bei 140 bis 240 °C, wobei durch gezielte Einstellung des Molekulargewichtes, einerseits über das Verhältnis an gegenüber Isocyanatgruppen reaktiven Gruppen der Komponenten B) und C) zu Isocyanatgruppen der Komponente A) und andererseits durch den Einsatz von monofunktionellen Kettenabbrechern E) ein gezieltes Verarbeitungstemperaturfenster eingestellt werden kann.

Unter dem Begriff Kunststoffteile, die aus den erfindungsgemäßen TPU hergestellt werden können, sind beispielsweise Folien, Türgriffe und Türdichtungen, Dreh- und Schaltknöpfe, Laufrollen, Türablagen, Armlehnen, Werkzeuggriffe, Pralltöpfe, Schläuche, Kabelummantelungen, Airbagabdeckungen, Instrumententafeln, Stossfängerleisten, Automobilantennen, Jalousien und Getränkehalter zu verstehen.

Die bei der Herstellung der erfindungsgemäßen TPU üblicherweise zum Einsatz kommenden Komponenten A) bis F) werden im Folgenden beispielhaft beschrieben:

Als aliphatische Diisocyanate A) werden übliche aliphatische und/oder cycloaliphatische Diisocyanate eingesetzt, beispielsweise Tetra-, Penta-, Hexa-, Hepta- und/oder Octamethylendiisocyanat, 2-Methylpentamethylendiisocyanat-1,5, 1-Isocyanato-3,3,5-trimethyl-5-isocyanatomethylcyclohexan (Isophorondiisocyanat, IPDI), 1,4-Cyclohexandiisocyanat, 1-Methyl-2,4 und/oder 2,6-cyclohexandiisocyanat, 4,4'-, 2,4'- und/oder 2,2'-Dicyclohexylmethandiisocyanat. Bevorzugt werden 1,6-Hexamethylendiisocyanat, Isophorondiisocyanat und 4,4'-Dicyclohexylmethandiisocyanat oder Mischungen aus diesen Isocyanaten als aliphatisches Diisocyanat A) eingesetzt.

Als gegenüber Isocyanaten reaktive Verbindungen B) können allgemein bekannte Polyhydroxylverbindungen mit zahlenmittleren Molekulargewichten Mn von 500 bis 10000 g/mol, bevorzugt 600 bis 7500 g/mol und besonders bevorzugt 800 bis 5000 g/mol und vorzugsweise mit einer zahlenmittleren Funktionalität von 1,8 bis 2,5, bevorzugt 1,8 bis 2,2 und besonders bevorzugt 1,9 bis 2,1 eingesetzt werden, wie beispielsweise Polyesterpolyole, Polyetheresterpolyole, Polyetherpolyole, Polyethercarbonatpolyole, Caprolactonpolyole, und Polycarbonatpolyole.

Geeignete Polyesterpolyole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Maleinsäure, Glutarsäure, Adipinsäure, Korksäure, Azelainsäure und Sebacinsäure und aromatische Dicarbonsäuren, wie Phthalsäure, Isophthalsäure und Terephthalsäure, bzw. die möglichen cyclischen Anhydride der genannten Dicarbonsäuren. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,2-und 1,3-Propandiol, 1,4-Butandiol, 1,5-Pentandiol, 1,6-Hexandiol, 1,10-Decandiol, 2,2-Dimethyl-1,3-propandiol, 3-Methyl-1,5-pentandiol, und Dipropylenglykol. Gegebenenfalls können auch Alkohole mit mehr als 2 OH-Gruppen zur Herstellung der Polyesterpolyole in Anteilen von 0 bis 30 Mol-%, bezogen auf die eingesetzten Mole an Diolen, mit verwendet werden. Solche mehrwertigen Alkohole sind beispielsweise Trimethylolpropan oder Glycerin. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterdiole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone. Die Polyesterdiole besitzen mittlere Molekulargewichte Mn von 500 bis 5000, bevorzugt von 700 bis 4 200 und können einzeln oder in Form von Mischungen untereinander zur Anwendung kommen.

Geeignete Polyetherpolydiole können dadurch hergestellt werden, dass man ein oder mehrere Alkylenoxide mit 2 bis 4 Kohlenstoffatomen im Alkylenrest mit einem Startermolekül, das bevorzugt zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, 1,2-Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyldiethanolamine, beispielsweise N-Methyl-diethanolamin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im Wesentlichen linearen Polyetherdiole besitzen zahlenmittlere Molekulargewichte Mn von 500 bis 10 000 g/mol, bevorzugt von 700 bis 4 200 g/mol. Sie können sowohl einzeln als auch in Form von Mischungen untereinander oder in Mischung mit den anderen beschriebenen Polyolen zur Anwendung kommen.

Geeignete Polycarbonatpolyole können dadurch hergestellt werden, dass man niedermolekulare Kohlensäureester, wie z. B. Dimethylcarbonat, Diethylcarbonat oder Diphenylcarbonat mit geeigneten Polyolen, vorzugsweise Diolen, unter Katalyse entsprechender Umesterungskatalysatoren, wie z. B. Titantetraisopropylat, mit Diolen umestert unter Abspaltung der entsprechenden Monoalkohole, wie z. B. Methanol, Ethanol oder Phenol. Geeignete Diole zur Umesterung niedermolekularer Kohlensäureester sind beispielsweise die oben bei der Herstellung der Polyesterpolyole genannten Diole oder auch kurzkettige Polyetherdiole, wie z. B. Polytetrahydrofuran mit einem Molekulargewicht Mn von ca. 250 g/mol). Besonders gut geeignete Polycarbonatpolyole basieren auf 1,6-Hexandiol, 1,4-Butandiol, 3-Methyl-1,5-pentandiol oder Mischungen dieser Diole. Die im Wesentlichen linearen Polycarbonatpolyole besitzen zahlenmittlere Molekulargewichte Mn von 500 bis 6000 g/mol, bevorzugt 800 bis 4000 g/mol.

Geeignete Polyethercarbonatpolyole können vorzugsweise entweder durch Copolymerisation von Alkylenoxiden mit Kohlendioxid unter Katalyse spezieller Katalysatoren, wie z. B. Doppelmetallcyanidkatalysatoren, oder durch Umesterung von niedermolekularen Kohlensäureesten mit Polyetherdiolen, wie oben beschrieben, hergestellt werden. Die im Wesentlichen linearen Polycarbonatpolyole besitzen zahlenmittlere Molekulargewichte Mn von 500 bis 6000 g/mol, bevorzugt 800 bis 4000 g/mol.

Als gegenüber Isocyanaten reaktive Verbindungen C) können allgemein bekannte Polyhydroxylverbindungen und/oder Polyaminverbindungen mit zahlenmittleren Molekulargewichten von 60 bis 490 g/mol, bevorzugt 60 bis 400 g/mol und besonders bevorzugt 62 bis 300 g/mol und bevorzugt zahlenmittleren Funktionalitäten von 1,8 bis 2,5, bevorzugt 1,8 bis 2,2 und besonders bevorzugt 1,9 bis 2,1 eingesetzt werden. Geeignete Polyaminverbindungen sind z. B. Diamine wie (cyclo)aliphatische Diamine, beispielsweise Isophorondiamin, Ethylendiamin, 1,2-Propylendiamin, 1,3-Propylendiamin, N-Methylpropylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Weiterhin können Aminoalkohole, wie z. B. N-2-(Methylamino)ethanol oder 3-(Methylamino)-1-propanol alsKettenverlängerungsmittel C) eingesetzt werden. Bevorzugt werden als Kettenverlängerungsmittel C) eine oder mehrere Verbindungen eingesetzt aus der Gruppe der aliphatischen Diole mit 2 bis 14 Kohlenstoffatomen, wie z.B. Ethandiol, 1,2-Propandiol, 1,3-Propandiol, 1,4-Butandiol, 2,3-Butandiol, 1,5-Pentandiol, 3-Methyl-1,5-pentandiol, 1,6-Hexandiol, 1,8-Octandiol, 1,10-Decandiol, 1,12-Dodecandiol, Diethylenglykol, Dipropylenglykol, 1,4-Cyclohexandiol, 1,4-Dimethanolcyclohexan und Neopentylglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A. Die genannten Diole können auch mit unterschiedlichen molaren Mengen an ε-Caprolacton unter Ringöffnungsreaktion umgesetzt werden, so dass entsprechende Kettenverlängerer mit zahlenmittleren Molekulargewichten bis 490 g/mol entstehen. Besonders bevorzugt werden als Kettenverlängerer Ethandiol, 1,4-Butandiol, 1,6-Hexandiol, 1,4-Dimethanolcyclohexan, 1,4-Di(β-hydroxyethyl)-hydrochinon oder 1,4-Di(β-hydroxyethyl)-bisphenol A und deren Umsetzungsprodukte mit ε-Caprolacton verwendet. Daneben können auch kleinere Mengen, bis zu 10 Gew.-% bezogen auf die Gesamtmenge der Komponente C), an Triolen, wie z. B. Trimethylolpropan oder Glycerin, zugesetzt werden.

Als Katalysatoren D) werden erfindungsgemäß Zirkonium enthaltende Verbindungen eingesetzt, insbesondere Zirkon-Komplex Katalysatoren. Als Zirkonium enthaltende Katalysatoren können z. B. folgende Produkte von Dorf Ketal Chemicals LLC, Stafford, USA, verwendet werden: Tyzor^{®}NBZ (n-Butylzirkonat), Tyzor^{®}NPZ (n-Propylzirkonat), Tyzor^{®}TEAZ (Zirkonium Chelat Komplex), Tyzor^{®}212 (Zirkonatkomplex), Tyzor^{®}215 (Zirkonium Chelat Komplex), Tyzor^{®}223 (Zirkonatkomplex), Unilink^{®}1020 (Zirkon Chelat Komplex), Unilink^{®}1030 (Zirkon Chelat Komplex). Weiterhin kommen z. B. auch folgende Katalysatoren von King Industries, Norwalk, USA, in Betracht: K-Kat^{®}4205 (Zirkon Chelat Komplex), K-Kat^{®}6212 (Zirkon Chelat Komplex), K-Kat^{®}A209 (Zirkon Chelat Komplex) oder K-Kat^{®} XC9213 (Zirkon Chelat Komplex).

Gegebenenfalls können zusätzlich zu den erfindungsgemäßen Zirkonium enthaltenden Katalysatoren weitere Katalysatoren eingesetzt werden, welche die Reaktion zwischen den NCO-Gruppen der Diisocyanate A) und den Hydroxylgruppen der Polyolkomponenten B) und C) beschleunigen, beispielsweise übliche tertiäre Amine, wie z. B. Triethylamin, Triisopropylamin, Tri-n-propylamin, N,N'- Dimethylcyclohexylamin, N-Methylmorpholin, N,N`-Dimethylpiperazin, 2-(Dimethylaminoethoxy)-ethanol, Diazabicyclo-(2,2,2)-octan, sowie insbesondere organische Metallverbindungen, wie Titansäureester, wie z. B. Titantetraisopropylat, Titantetrabutylat, Eisenverbindungen, wie z. B. Eisen-(III)-acetylacetonat, Zinnverbindungen, wie z. B. Zinndiacetat, Zinndioctoat, Zinndilaurat oder die Zinndialkylsalze aliphatischer Carbonsäuren, wie z. B. Dibutylzinndiacetat, Dibutylzinndilaurat.

Die erfindungsgemäß eingesetzten Zirkonium basierten Katalysatoren D) werden üblicherweise in Mengen von 0,0001 bis 1,0 Gew.-Teilen, vorzugsweise 0,001 bis 0,5 Gew.-Teilen, bezogen auf 100 Gew.-Teile Polyhydroxylverbindung B) eingesetzt.

Als Kettenabbrecher E) können Verbindungen eingesetzt werden, die nur eine gegenüber den Isocyanaten A) reaktive Gruppe aufweisen, wie z. B. Monoalkohole, beispielsweise Ethanol, 1-Propanol, 2-Propanol, 1-Butanol, 1-Hexanol, 1-Octanol oder Stearylalkohol. Durch solche Kettenabbrecher können das Molekulargewicht, die Schmelzviskosität und damit auch das Fließverhalten der TPU gezielt eingestellt werden.

Als weitere Hilfs- und Zusatzmittel F) können übliche Additive, wie z. B. oberflächenaktive Substanzen, Flammschutzmittel, Keimbildungsmittel, Gleit- und Entformungsmittel, Farbstoffe, Pigmente und Füllstoffe, Inhibitoren, Stabilisatoren gegen Hydrolyse, Licht, Hitze, Oxidation oder Verfärbung, Schutzmittel gegen mikrobiellen Abbau sowie Verstärkungsmittel und Weichmacher verwendet werden.

Wie in den Beispielen anschaulich nachgewiesen wird, kann durch die Verwendung von Zirkonium-Verbindungen als Katalysatoren zur Herstellung von aliphatischen thermoplastischen Polyurethanen der Anteil an Fehlstellen in den entsprechenden Folien im Vergleich zu Folien aus TPU, die mit Katalysatoren, die üblicherweise bei der Herstellung von aliphatischen TPU eingesetzt werden, z. B. Dibutylzinndilaurat, deutlich verringert werden. Die erfindungsgemäßen TPU sind nicht nur zur Folienherstellung geeignet, sondern auch für andere Kunststoffteile mittels diverser, an sich bekannter Kunststoff-Verarbeitungstechniken, wie z. B. Spritzguss, Extrusion, Kalander, Powder Slush usw. und liefern auch dort verbesserte Qualitäten in den so hergestellten Produkten.

Die Erfindung soll anhand der nachfolgenden Beispiele näher erläutert werden.

### Beispiele:

Eingesetzte Rohstoffe:
Acclaim 2220N^{®}: Polyetherpolyol auf Basis von Propylenoxid und Ethylenoxid mit einer OH-Zahl von 50 mg KOH/g und einer Funktionalität von 2,0 , Handelsprodukt der Bayer MaterialScience AG.
Polyether LP112^{®}: Polyetherpolyol auf Basis von Propylenoxid mit einer OH-Zahl von 112 mg KOH/g und einer Funktionalität von 2,0 , Handelsprodukt der Bayer MaterialScience AG.
PE225B: Butandiol-Adipat der Bayer MaterialScience AG mit einer OH-Zahl von 50 mg KOH/g.
HDO: 1,6-Hexandiol
HDI: 1,6-Hexamethylendiisocyanat
Unilink 1030^{®}: Zirkonkatalysator von Dorf Ketal
K-Kat XC9213^{®}: Zirkonkatalysator von King Industries
DBTL: Dibutylzinndilaurat
Irganox 245^{®}: Antioxidant der BASF AG
Chimassorb 2020^{®}: Polymeres "HALS" (Lichtschutzmittel) der BASF AG

### Beispiel 1 (erfindungsgemäß)

Ein Gemisch aus Acclaim 2220N, PE225B und Irganox 245 wurde in einem Kessel unter Rühren auf ca. 90 °C erwärmt und anschließend in einem Wärmetauscher auf ca. 170 °C erhitzt. Nach dem Wärmetauscher wurde diese Mischung zusammen mit HDO (170 °C) in einem Statikmischer SMX20 der Fa. Sulzer Chemtech AG, Winterthur, Schweiz, zusammengeführt und homogenisiert. Anschließend wurde diese Polyolmischung in einem weiteren Statikmischer SMX20 der Fa. Sulzer mit HDI (140°C) zusammengeführt und homogenisiert. Anschließend wurde diese Mischung mit einer Temperatur von 155 °C in das 1. Gehäuse einer Reaktionsschnecke (ZSK 53) dosiert. Eine 5%-ige Lösung von Unilink 1030 in Polyether LP112 wurde ebenfalls in das Gehäuse 1 der ZSK 53 dosiert. Chimassorb 2020 wurde in das Gehäuse 11 der ZSK 53 dosiert. Das gesamte Gemisch reagierte in dem Extruder bis zur vollständigen Umsetzung aus und wurde anschließend mittels Unterwassergranulierung (UWG) granuliert. Danach erfolgte die Trocknung der Granulate über einen Zeitraum von ca. 6 Stunden bei 75 °C.

### Zusammensetzung des TPU:

a) 1,0 mol Polyolmischung (Acclaim 2220N : PE225B, Molverhältnis =3:7)
b) 2,0 mol HDO
c) 3,0 mol HDI
d) 350 ppm Unilink 1030^{®} (bezogen auf die Polyolmenge)
e) 0,5 Gew.-% Irganox 245^{®} (bezogen auf PE225B)
f) 0,4 Gew.-% Chimassorb 2020^{®} (bezogen auf a + b + c)

### Beispiel 2 (erfindungsgemäß)

Es wurde ein TPU analog Beispiel 1 hergestellt, jedoch wurde Unilink 1030^{®} durch 150 ppm K-Kat XC9213^{®} ersetzt.

### Beispiel 3 (nicht erfindungsgemäß)

Es wurde ein TPU analog Beispiel 1 hergestellt, jedoch wurde Unilink 1030^{®} durch 80 ppm (DBTL ist reaktiver als Unilink 1030, so dass weniger Menge benötigt wird.) DBTL ersetzt.

Von allen hergestellten TPU wurden die Lösungsviskositäten bei 25°C gemäß DIN 51562, der Schmelzindex (MVR) gemäß DIN EN ISO 1133 und die mechanischen Werte durch Zugversuch gemäß DIN 53504 (100% Modul, Reißfestigkeit, Reißdehnung) und die Shore A Härte gemäß DIN 53505 ermittelt.

Weiterhin wurden von den drei TPU der Beispiele 1 bis 3 Folien mit einer Dicke von ca. 0,2 mm hergestellt und optisch begutachtet und bewertet.

### Testbedingungen:

### 1) Zugversuch

Der Zugversuch erfolgte an S1-Stäben (entspricht Prüfkörper Typ 5 nach EN ISO 527, ausgestanzt aus Spritzplatten) gemäß DIN 53504 mit einer Zuggeschwindigkeit von 200 mm/min.

### 2) Messung der Lösungsviskosität (LV)

Es wurden 99,7 g N-Methyl-2-pyrrolidon mit 0,1% Dibutylamin und 0,4 g TPU-Granulat eingewogen. Die Proben wurden auf einem Magnetrührer bei ca. 70 °C ca. 1 Stunde gerührt und über Nacht auf Raumtemperatur abgekühlt. Die Proben und ein Blindwert (reines Lösungsmittel) wurden bei 25 °C an einem Viskositätsmessplatz der Fa. Schott gemessen. Die relative Lösungsviskosität (LV) berechnet sich aus der Zeit (Lösung) dividiert durch die Zeit (Lösungsmittel). Der Viskositätsmessplatz der Fa. Schott besteht aus: Viskositätsmessplatz AVS 400, Messstativ ASV/S, Glasthermostat, Ubbelohde-Viskosimeter Typ 50110.

### 3) Schmelzindex (MVR)

Die MVR Messungen wurden bei 180 °C und 10 kg (98N) Auflagegewicht mit 5 Minuten Vorheizzeit gemäß ISO 1133 in einem MVR Gerät der Fa. Göttfert, Modell MP-D, gemessen.

Die gemessenen Werte sind in der nachfolgenden Tabelle aufgeführt.

| TPU aus | Schmelzindex MVR [cm³/10min] | Relative LV (Granulat) | Rel. LV (180°C mit 98N) MVR-Strang | 100% Modul [MPA] | Reißfestigkeit [MPa] | Reißdehnung [%] | Shore A Härte |
|---|---|---|---|---|---|---|---|
| Beispiel 1 | 20,8 | 1,483 | 1,486 | 5,8 | 25,2 | 831 | 87 |
| Beispiel 2 | 18,4 | 1,492 | 1,500 | 7,2 | 26,6 | 701 | 89 |
| Beispiel 3 | 24,6 | 1,638 | 1,469 | 6,4 | 24,1 | 844 | 88 |

Die jeweils relativen Lösungsviskositäten (LV) der Granulate im Vergleich zu den relativen Lösungsviskositäten der MVR-Stränge der erfindungsgemäßen Beispiele 1 und 2 weisen jeweils nur sehr geringe Differenzen auf. Die Lösungsviskosität des MVR-Strangs des Vergleichsbeispiels 3 ist deutlich geringer als die des entsprechenden Granulats. Die erfindungsgemäßen TPU, die durch Katalyse mittels Zirkonkatalysatoren hergestellt wurden, zeigen diesen Unterschied nicht und schmelzen deshalb homogener auf und sind daher besser verarbeitbar, sowohl mittels Spritzguß als auch mittels Extrusion.

Die mechanischen Eigenschaften (100%-Modul, Reißfestigkeit, Reißdehnung) der 3 TPU liegen auf einem nahezu gleichen Niveau.

### Herstellung von Flachfilmen

Das jeweilige TPU Granulat wurde in einem Einwellen-Extruder 30/25D Plasticorder^{®} PL 2100-6 der Firma Brabender aufgeschmolzen (Dosierung 3 kg/h; 180-200 °C) und durch eine Breitschlitzdüse (150 mm) zu einem Flachfilm mit einer Filmdicke von ca. 0,2 mm extrudiert.

Die erfindungsgemäßen TPU der Beispiele 1 und 2 ergeben Filme, die weitgehend partikelfrei sind. Der TPU-Film auf Basis des nicht erfindungsgemäßen Beispiels 3 enthält viele große (> 500µ), nicht aufgeschmolzene Partikel, die Fehlstellen im Film darstellen und von denen aus Risse im Film entstanden sind oder bei Belastung entstehen können.

## Patentansprüche

1. Aliphatische thermoplastische Polyurethane erhältlich durch Reaktion von
A) Aliphatischen Diisocyanaten mit
B) Gegenüber Isocyanaten reaktiven Verbindungen mit zahlenmittleren Molekulargewichten von 500 bis 10000 g/mol und zahlenmittleren Funktionalitäten von 1,8 bis 2,5 und
C) Kettenverlängerungsmitteln mit zahlenmittleren Molekulargewichten von 60 bis 490 g/mol
und zahlenmittleren Funktionalitäten von 1,8 bis 2,5,
**dadurch gekennzeichnet, dass** die Reaktion von A) mit B) und C) in Gegenwart von
D) Zirkonium enthaltenden Katalysatoren und
E) Gegebenenfalls Kettenabbrechern und
F) Gegebenenfalls Hilfs- und Zusatzmitteln erfolgt.

2. Verfahren zur Herstellung von aliphatischen thermoplastischen Polyurethanen gemäß Anspruch 1, wobei
A) Aliphatische Diisocyanate mit
B) Gegenüber Isocyanaten reaktiven Verbindungen mit zahlenmittleren Molekulargewichten von 500 bis 10000 g/mol und zahlenmittleren Funktionalitäten von 1,8 bis 2,5 und
C) Kettenverlängerungsmitteln mit zahlenmittleren Molekulargewichten von 60 bis 490 g/mol und zahlenmittleren Funktionalitäten von 1,8 bis 2,5 umgesetzt werden,
**dadurch gekennzeichnet, dass** die Reaktion von A) mit B) und C) in Gegenwart von
D) Zirkonium enthaltenden Katalysatoren und
E) Gegebenenfalls Kettenabbrechern und
F) Gegebenenfalls Hilfs- und Zusatzmitteln durchgeführt wird

3. Folien mit einer Dicke von 0,01 bis 2 mm aus aliphatischen thermoplastischen Polyurethanen gemäß Anspruch 1

4. Verwendung der aliphatischen thermoplastischen Polyurethane gemäß Anspruch 1 zur Herstellung von Folien, Türgriffen und Türdichtungen, Dreh- und Schaltknöpfen, Laufrollen, Türablagen, Armlehnen, Werkzeuggriffen, Pralltöpfen, Schläuchen, Kabelummantelungen, Airbagabdeckungen, Instrumententafeln, Stossfängerleisten, Automobilantennen, Jalousien und Getränkehaltern.
